# EUROPEAN PATENT SPECIFICATION

(11) **EP 3 048 513 B1**
(45) Date of publication and mention of the grant of the patent: **08.02.2017**
(21) Application number: 16151389.0
(22) Date of filing: 14.01.2016
(51) Int. Cl.: G08B 25/00, G08B 29/16, G08B 25/14, G06F 3/041

(54) **A METHOD TO INVOKE BACKUP INPUT OPERATION**
VERFAHREN ZUR AUFRUFUNG EINES SICHERUNGSEINGABEBETRIEBS
PROCÉDÉ D'APPEL D'OPÉRATION D'ENTRÉE DE SAUVEGARDE

(30) Priority: 23.01.2015 US 201514603620
(43) Date of publication of application: 27.07.2016
(73) Proprietor: Honeywell International Inc., Morris Plains, NJ 07950 (US)
(72) Inventor: GUO, Guanghong, Morris Plains, NJ 07950 (US)
(74) Representative: Houghton, Mark Phillip

(56) References cited:
- EP-A2- 1 972 157
- DE-U1-202008 000 261
- US-A- 5 086 385

## Description

### FIELD

This application relates to security systems and more particular to the control of security systems.

### BACKGROUND

Systems are known to protect people and assets within secured areas. Such systems are typically based upon the use of one more sensors that detect threats within the secured area.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, sensors may be placed in different areas based upon the respective uses of those areas. For example, if people are present during some portions of a normal day and not at other times, then sensors may be placed along a periphery of the space to provide protection while the space is occupied while additional sensors may be placed within an interior of the space and used when the space is not occupied.

In most cases, threat detectors are connected to a local control panel. In the event of a threat detected via one of the sensors, the control panel may sound a local audible alarm. The control panel may also send a signal to a central monitoring station.

While security systems work well, a user must often interact with the security system through a control panel located within the secured area. However, control panels have been known to malfunction at unexpected times. Accordingly, a need exists for better methods of interacting with security systems.

The invention is defined by an apparatus as claimed in claim 1 and by an apparatus as claimed in claim 8. Preferred embodiments are set out in the dependent claims.

### BRIEF DESCRIPTION OF THE DRAWINGS

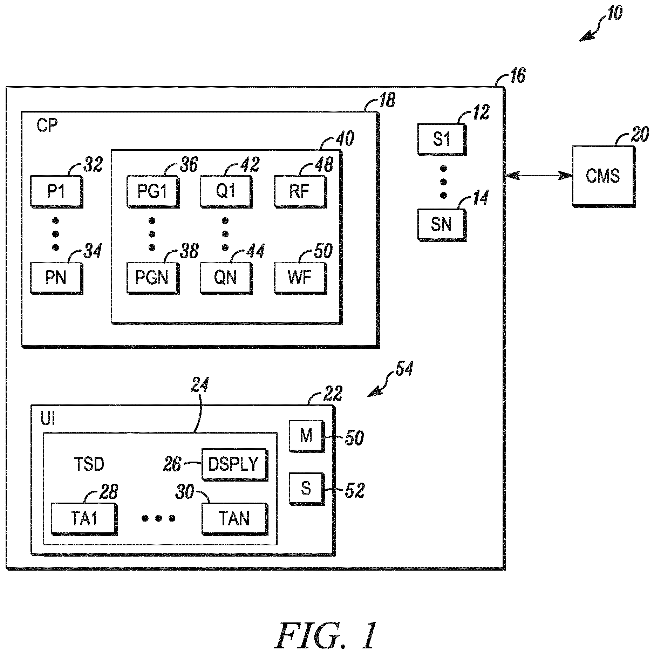

Fig. 1 illustrates a block diagram of a system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

FIG. 1 depicts a security system 10 shown generally in accordance with an illustrated embodiment. Included within the security system may be a number of sensors 12, 14 used for detecting threats within a secured geographic area 16. Threats may originate from any of a number of different sources. For example, an intruder may represent a threat to people and/or assets within a home or business. Similarly, a fire or a gas leak may threaten the safety of those same people and/or assets.

Accordingly, the sensors may be embodied in any of a number of different forms. For example, at least some of the sensors may be limit switches placed on the doors and windows providing entry into and egress from the secured area. Some other of the sensors may be passive infrared (PIR) sensors placed within the secured area in order to detect intruders who have been able to circumvent the sensors along the periphery of the secured area. Still other of the sensors may be smoke or fire detectors.

Also included within the secured area is a control panel 18. The control panel may be located within the secured area as shown in FIG. 1 or located remotely.

The control panel may monitor the sensors for activation. Upon activation of one of the sensors, the control panel may compose an alarm message and send it to a central monitoring station 20. The central monitoring station may response by summoning the appropriate help (e.g., police, fire department, etc.).

The security system may be controlled by a human user through use of a user interface 22 located near an entrance into the secured area. The user interface may include a touch screen display 24 that shows a status of the security system (e.g., armed disarmed, etc.) and that receives manual inputs from the user (e.g., personal identification number (PIN), instructions, etc.). In this regard, the touch sensitive screen may include a display area 26 and a number of touch sensitive areas 28, 30. The display and touch sensitive areas may be located on different areas of the display or they may be at least partially coextensive.

The touch sensitive areas of the screen may each be associated with a graphical indicator of function. The graphical indicator of function may be provided in the form of a keyboard with individual indication of function superimposed over each touch sensitive area. For example, some of the areas may be associated with a number while other areas may be associated with an alphabetic letter or other character. The graphical indicator may be printed on the screen or may be programmable.

The geographic coordinates of each touch sensitive area on the display may be established during manufacture by one or more conductive structures embedded into the display. Each of the conductive structures terminates in a respective touch sensitive area that reacts to contact (or near contact) by the finger(s) of a human user. Contact (or near contact) changes a user modulated parameter (e.g., resistance, capacitance, etc.) associated with the touch sensitive area.

Included within the control panel, the user interface and each of the sensors may be one or more processor apparatus (processors) 32, 34, each operating under control of one or more computer programs 36, 38 loaded from a non-transitory computer readable medium (memory) 40. As used herein, reference to a step performed by a computer program is also reference to the processor that executed that step.

In this regard, one or more input processors may monitor each of the touch sensitive areas for contact (or near contact) by a finger of a user. In this regard, contact by the finger of the user changes the modulated parameter from some quiescent value to some other value controlled by contact with the person's finger.

In this regard, a quiescent value (or range of values) of each touch sensitive area of the display may be saved in a respective file 42, 44 in memory. A change in this value (e.g., by a threshold value) associated with each location may also be saved. It is this change from the quiescent value to the value above (or below) the threshold that is detected by the input processor(s) and interpreted as an intentional activation of the corresponding touch sensitive area.

A status processor within the control panel may monitor the keyboard of the user interface for instructions from the human user. The user may enter a personal identification number (PIN) and instruction to arm or disarm the security system. Upon receiving a PIN and instruction through the keyboard, the status processor may compare the PIN with the PIN(s) of authorized users within a reference file 48. If the entered PIN number matches the PIN number of one of the authorized users, then the status processor may execute the instruction entered along with the PIN.

If the instruction is an arm command, then the status processor activates an alarm processor that monitors the sensors. Upon activation of any of the sensors, the alarm processor composes and sends the alarm message to the central monitoring station.

Similarly, if the instruction is an arm-away command, then the alarm processor may only monitor sensors along a periphery of the secured area. As above, upon activation of one of the sensors along the periphery, the alarm processor composes and sends an alarm message to the central monitoring station.

Under one illustrated embodiment, a fault detection processor monitors the quiescent value of each touch sensitive area for deviations from the range of acceptable values saved in memory. The fault detection processor may also detect changes in values caused by activation of each touch sensitive area by a user to identify values that exceed a corresponding threshold value.

Upon detecting a fault in the touch screen, the fault processor activates a back-up user interface 54. Under one illustrated embodiment, the back-up interface is a voice interface implemented though the user interface.

Under this embodiment, the user interface includes a microphone 50 and an audio speaker 52. A voice recognition processor monitors the microphone for sounds from the human user and recognizes any words or other instructions spoken by the user.

In this regard, the system may be provided with a word file 50 of common instructions that may be recognized by the voice recognition processor and used for control of the system. Alternatively, the user may initially provide spoken examples of instructions to be recognized and executed by the system.

For example, the user may say "pin number 12345" followed by "disarm" to disarm the system. Similarly, the user may simply say "arm" to arm the system.

In response, the voice recognition processor may recognize the spoken words, verify the PIN and execute the disarm instruction to disarm the system. A status processor may also retrieve a status indicator from the work file and provide an audio status report by audibly reproducing the work "disarmed" or "armed" through the speaker to confirm execution of the arm instruction.

The system of FIG. 1 offers a number of advantages over conventional systems. For example, the only input provided in a conventional system is a touch screen display. However, there are cases where the touch screen may not work but where the other parts of the system still operate in a normal manner. This provides a need for a back-up method to deal with the urgent cases or arm, disarm, etc.

The system of FIG. 1 provides a unique structure to determine whether the touch screen is working properly. In one example, the touch screen is a resistive touch screen where abnormal resistive values indicate that the touch screen is not working. In this case, the system automatically activates a voice input system so that a user can perform basic operations in urgent situations.

In general, the system includes a touch-screen interface of a security system that protects a secured geographic area, a processor that detects failure of the touch screen interface based upon a user-modulated parameter of the touch-screen and a processor that activates a back-up user interface based upon the detected failure.

Alternatively, the system includes a touch-screen interface of a security system that protects a secured geographic area, a processor that measures a quiescent parameter of the touch screen thereby detecting failure of the touch-screen and a processor that activates a back-up user interface of a human user based upon the detected failure.

Alternatively, the system includes a touch-screen control panel of a security system that protects a secured geographic area, a processor that measures a user activated parameter of the touch screen thereby detecting failure of the touch-screen and a back-up user interface of the security system that automatically activated in response to the detected failure.

From the foregoing, it will be observed that numerous variations and modifications may be effected without departing from the scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a touch-screen interface of a security system that protects a secured geographic area;
a processor that detects failure of the touch screen interface based upon a user-modulated parameter of the touch-screen; and
a processor that activates a back-up user interface based upon the detected failure.

2. The apparatus as in claim 1 wherein the back-up user interface further comprises a voice interface.

3. The apparatus as in claim 2 further comprising a voice recognition processor that recognizes spoken words of human users.

4. The apparatus as in claim 3 further comprising a processor that receives a sequence of digits and disarms the security system in response thereto.

5. The apparatus as in claim 4 further comprising a processor that compares the received sequence of digits with a reference sequence of digits saved in memory.

6. The apparatus as in claim 5 further comprising a processor that verbally annunciates an indicator of status.

7. The apparatus as in claim 6 wherein the verbal annunciation further comprises one or more spoken words.

8. An apparatus comprising:
a touch-screen interface of a security system that protects a secured geographic area;
a processor that measures a quiescent parameter of the touch screen thereby detecting failure of the touch-screen; and
a processor that activates a back-up user interface of a human user based upon the detected failure.

9. The apparatus as in claim 8 wherein the measured quiescent parameter further comprises resistance.

10. The apparatus as in claim 8 wherein the back-up user interface further comprises a voice-based interface.

11. The apparatus as in claim 10 further comprising a voice recognition processor that recognizes spoken words of human users.

12. The apparatus as in claim 11 further comprising a processor that receives a sequence of spoken digits and disarms the security system in response thereto.

13. The apparatus as in claim 12 further comprising a processor that compares the received sequence of spoken digits with a reference sequence of digits saved in memory.

14. The apparatus as in claim 13 further comprising a processor that verbally annunciates an indicator of status through a speaker mounted to a control panel of the security system.

15. The apparatus as in claim 14 wherein the verbal annunciation further comprises one or more spoken words including at least the word disarm.

## Patentansprüche

1. Vorrichtung, die Folgendes umfasst:
eine aus einem berührungsempfindlichen Bildschirm gebildete Schnittstelle eines Sicherheitssystems, das einen gesicherten geographischen Bereich schützt;
einen Prozessor, der auf der Grundlage eines anwendermodulierten Parameters des berührungsempfindlichen Bildschirms ein Versagen der aus einem berührungsempfindlichen Bildschirm gebildeten Schnittstelle detektiert, und
einen Prozessor, der auf der Grundlage des detektierten Versagens eine Reserveanwenderschnittstelle aktiviert.

2. Vorrichtung nach Anspruch 1, wobei die Reserveanwenderschnittstelle ferner eine Sprachschnittstelle umfasst.

3. Vorrichtung nach Anspruch 2, die ferner einen Spracherkennungsprozessor umfasst, der gesprochene Worte eines menschlichen Anwenders erkennt.

4. Vorrichtung nach Anspruch 3, die ferner einen Prozessor umfasst, der eine Folge von Ziffern empfängt und das Sicherheitssystem als Antwort darauf entschärft.

5. Vorrichtung nach Anspruch 4, die ferner einen Prozessor umfasst, der die empfangene Folge von Ziffern mit einer Bezugsfolge von Ziffern vergleicht, die im Speicher gespeichert sind.

6. Vorrichtung nach Anspruch 5, die ferner einen Prozessor umfasst, der verbal einen Zustandsindikator angibt.

7. Vorrichtung nach Anspruch 6, wobei die verbale Angabe ferner ein oder mehrere gesprochene Worte umfasst.

8. Vorrichtung, die Folgendes umfasst:
eine aus einem berührungsempfindlichen Bildschirm gebildete Schnittstelle eines Sicherheitssystems, das einen gesicherten geographischen Bereich schützt;
einen Prozessor, der einen Ruheparameter des berührungsempfindlichen Bildschirms misst, wodurch ein Versagen des berührungsempfindlichen Bildschirms detektiert wird, und
einen Prozessor, der auf der Grundlage des detektierten Versagens eine Reserveanwenderschnittstelle eines menschlichen Anwenders aktiviert.

9. Vorrichtung nach Anspruch 8, wobei der gemessene Ruheparameter ferner einen Widerstand umfasst.

10. Vorrichtung nach Anspruch 8, wobei die Reserveanwenderschnittstelle ferner eine sprachbasierte Schnittstelle umfasst.

11. Vorrichtung nach Anspruch 10, die ferner einen Spracherkennungsprozessor umfasst, der gesprochene Worte eines menschlichen Anwenders erkennt.

12. Vorrichtung nach Anspruch 11, die ferner einen Prozessor umfasst, der eine Folge von gesprochenen Ziffern empfängt und das Sicherheitssystem als Antwort darauf entschärft.

13. Vorrichtung nach Anspruch 12, die ferner einen Prozessor umfasst, der die empfangene Folge von gesprochenen Ziffern mit einer Bezugsfolge von Ziffern vergleicht, die im Speicher gespeichert sind.

14. Vorrichtung nach Anspruch 13, die ferner einen Prozessor umfasst, der durch einen Lautsprecher, der an einer Steuertafel des Sicherheitssystems angebracht ist, verbal einen Zustandsindikator angibt.

15. Vorrichtung nach Anspruch 14, wobei die verbale Angabe ferner ein oder mehrere gesprochene Worte umfasst, die mindestens das Wort "entschärfen" enthalten.

## Revendications

1. Appareil comprenant :
une interface à écran tactile d'un système de sécurité qui protège une zone géographique sécurisée ;
un processeur qui détecte une défaillance de l'interface à écran tactile sur la base d'un paramètre modulé par l'utilisateur de l'écran tactile ; et
un processeur qui active une interface utilisateur de sauvegarde sur la base de la défaillance détectée.

2. Appareil selon la revendication 1, dans lequel l'interface utilisateur de sauvegarde comprend en outre une interface vocale.

3. Appareil selon la revendication 2, comprenant en outre un processeur de reconnaissance vocale qui reconnaît des mots parlés d'utilisateurs humains.

4. Appareil selon la revendication 3, comprenant en outre un processeur qui reçoit une séquence de chiffres et qui désarme le système de sécurité en réponse à celle-ci.

5. Appareil selon la revendication 4, comprenant en outre un processeur qui compare la séquence de chiffres reçue à une séquence de chiffres de référence enregistrée en mémoire.

6. Appareil selon la revendication 5, comprenant en outre un processeur qui annonce verbalement un indicateur d'état.

7. Appareil selon la revendication 6, dans lequel l'annonce verbale comprend en outre un ou plusieurs mots parlés.

8. Appareil comprenant :
une interface à écran tactile d'un système de sécurité qui protège une zone géographique sécurisée ;
un processeur qui mesure un paramètre de repos de l'écran tactile détectant ainsi une défaillance de l'écran tactile ; et
un processeur qui active une interface utilisateur de sauvegarde d'un utilisateur humain sur la base de la défaillance détectée.

9. Appareil selon la revendication 8, dans lequel le paramètre de repos mesuré comprend en outre une résistance.

10. Appareil selon la revendication 8, dans lequel l'interface utilisateur de sauvegarde comprend en outre une interface basée sur la voix.

11. Appareil selon la revendication 10, comprenant en outre un processeur de reconnaissance vocale qui reconnaît des mots parlés d'utilisateurs humains.

12. Appareil selon la revendication 11, comprenant en outre un processeur qui reçoit une séquence de chiffres parlés et qui désarme le système de sécurité en réponse à celle-ci.

13. Appareil selon la revendication 12, comprenant en outre un processeur qui compare la séquence reçue de chiffres prononcés à une séquence de chiffres de référence enregistrée en mémoire.

14. Appareil selon la revendication 13, comprenant en outre un processeur qui annonce verbalement un indicateur d'état par l'intermédiaire d'un haut-parleur monté sur un pupitre de commande du système de sécurité.

15. Appareil selon la revendication 14, dans lequel l'annonce verbale comprend en outre un ou plusieurs mots parlés, dont au moins le mot « désarmer ».
